# EUROPÄISCHE PATENTANMELDUNG

(11) **EP 4 147 549 A1**
(43) Veröffentlichungstag der Anmeldung: **15.03.2023**
(21) Anmeldenummer: 22180951.0
(22) Anmeldetag: 24.06.2022
(51) Int. Cl.: A01B 59/00, A01B 63/111

(54) **LANDWIRTSCHAFTLICHE ARBEITSMASCHINE, LANDWIRTSCHAFTLICHER ZUG UND VER-FAHREN ZUM BETREIBEN EINES LANDWIRTSCHAFTLICHEN ZUGS**

(30) Priorität: 13.09.2021 DE 102021123633
(71) Anmelder: CLAAS Tractor S.A.S., 78141 Vélizy-Villacoublay Cedex (FR)
(72) Erfinder: Goupil, Romain, 72550 Coulans sur Gée (FR)
(74) Vertreter: CLAAS Gruppe

(57) **Zusammenfassung**

Eine landwirtschaftliche Arbeitsmaschine (1), insbesondere ein Traktor, umfasst ein als Dreipunktaufhängung ausgebildeten Hubwerk (5) zur Aufnahme eines Bodenbearbeitungsgeräts (8), insbesondere eines Pflugs, wobei das Hubwerk (5) zwei Unterlenker (7) und einen Oberlenker (6) umfasst, die jeweils mit einem ersten Ende gelenkig mit einem Rahmenteil der landwirtschaftlichen Arbeitsmaschine (1) verbunden sind und mit einem gegenüberliegenden zweiten Ende mit dem Bodenbearbeitungsgerät (8) verbindbar sind, wobei der Oberlenker (6) zur Verlagerung oder Ausrichtung des Bodenbearbeitungsgeräts (8) längenverstellbar ist. Dabei ist über mindestens einen Sensor (10, 11, 12) ein Höhenprofil des zu bearbeitenden Bodens (13) erfassbar und eine Längenänderung des Oberlenkers (6) wird abhängig von dem erfassten Höhenprofil des zu bearbeitenden Bodens (13) ausgeführt. Ferner betrifft die Erfindung einen Zug und ein Verfahren zum Betreiben eines landwirtschaftlichen Zugs.

## Beschreibung

Die vorliegende Erfindung betrifft eine landwirtschaftliche Arbeitsmaschine, insbesondere ein Traktor, mit einem als Dreipunktaufhängung ausgebildeten Hubwerk zur Aufnahme eines Bodenbearbeitungsgeräts, insbesondere eines Pflugs, wobei das Hubwerk zwei Unterlenker und einen Oberlenker umfasst, die jeweils mit einem ersten Ende gelenkig mit einem Rahmenteil der landwirtschaftlichen Arbeitsmaschine verbunden sind und mit einem gegenüberliegenden zweiten Ende mit dem Bodenbearbeitungsgerät verbindbar sind, wobei der Oberlenker zur Verlagerung oder Ausrichtung des Bodenbearbeitungsgeräts längenverstellbar ist, einen Zug und ein Verfahren zum Betreiben einer landwirtschaftlichen Arbeitsmaschine.

Die EP 3 485 714 B1 offenbart eine Vorrichtung zur Erhöhung der Belastung der angetriebenen Hinterräder von Traktoren während der Bodenbearbeitung. Hierfür ist an einem Traktor eine Dreipunktaufhängung mit zwei Unterlenkern und einem Oberlenker vorgesehen, die mit einem Ende gelenkig mit einem Rahmenteil des Traktors und mit einem zweiten Ende mit dem Bodenbearbeitungsgerät verbunden sind. Der Oberlenker ist dabei über einen doppelt wirkenden hydraulischen Zylinder in der Länge veränderbar, um bei Schwankungen im Bodenwiderstand, die durch Kraftsensoren oder einer Änderung des Öldrucks am Kolben des hydraulischen Zylinders detektiert werden, zu reagieren und die Länge des Oberlenkers zu verkürzen oder zu verlängern. Dadurch kann bei einer Erhöhung des Bodenwiderstandes durch eine Verkürzung des Oberlenkers die Last an der Hinterachse des Traktors erhöht werden, um den Boden kontinuierlich zu bearbeiten.

Die Erfassung des Bodenwiderstandes durch einen Kraftsensor oder den Öldruck hat den Nachteil, dass auf die veränderten Bodenverhältnisse erst reagiert werden kann, wenn diese bereits die Bearbeitung des Bodens beeinflussen. Zudem soll das Bodenbearbeitungsgerät abhängig vom Bodenprofil kontinuierlich gezogen werden.

Es ist daher Aufgabe der der vorliegenden Erfindung eine landwirtschaftliche Arbeitsmaschine und ein Verfahren zum Betreiben einer landwirtschaftlichen Arbeitsmaschine zu schaffen, die einen optimierten Betrieb abhängig von einem Höhenprofil des zu bearbeitenden Bodens ermöglichen.

Diese Aufgabe wird mit einer landwirtschaftlichen Arbeitsmaschine mit den Merkmalen des Anspruchs 1, einem landwirtschaftlichen Zug nach Anspruch 9 und einem Verfahren mit den Merkmalen des Anspruchs 10 gelöst.

Bei der erfindungsgemäßen landwirtschaftlichen Arbeitsmaschine ist ein Oberlenker eines Hubwerkes als Dreipunktaufhängung zur Änderung der Neigungsverstellung der Arbeitsmaschine längenverstellbar, wobei über mindestens ein Sensor ein Höhenprofil des zu bearbeitenden Bodens erfassbar ist, damit eine Längenänderung des Oberlenkers abhängig von dem erfassten Höhenprofil des zu bearbeitenden Bodens ausführbar ist. Durch die Detektierung der Bodenhöhe bei der Bearbeitung kann über eine Verstellung des Oberlenkers das Bodenbearbeitungsgerät derart geneigt werden, dass trotz der Änderung des Bodenprofils ein festgelegte Bearbeitungstiefe konstant beibehalten wird.

Ferner können in einem hügeligen Gelände Bodenneigungen erfasst werden, um dann die Neigung oder Ausrichtung der Arbeitsmaschine abhängig von der Bodenkontur zu verändern. Dies ermöglicht einen gleichmäßigen Betrieb der Arbeitsmaschine mit dem Bodenbearbeitungsgerät, beispielsweise einem Pflug, der während der Bodenbearbeitung im Wesentlichen mit gleicher Bearbeitungstiefe bewegt werden kann.

Vorzugsweise ist eine Steuereinrichtung vorgesehen, die Daten von dem mindestens einen Sensor zum Höhenprofil des zu bearbeitenden Bodens erfasst und mittels dem eine Längenänderung des Oberlenkers steuerbar ist. Dadurch lässt sich die Fahrtbewegung kontinuierlich durchführen.

Für eine genaue Erfassung des Höhenprofil des zu bearbeitenden Bodens kann die Erfassung über mehrere Sensoren erfolgen, insbesondere Positions- und Abstandssensoren, die an der Arbeitsmaschine und/oder dem Bodenbearbeitungsgerät angeordnet sind. Solche berührungslosen Sensoren können am Gestell der Arbeitsmaschine angeordnet sein, um das Höhenprofil des zu bearbeitenden Bodens zu erfassen, bevor die angetriebene Hinterachse oder das Bodenbearbeitungsgerät die erfasste Stelle überfahren.

In einer bevorzugten Ausgestaltung erfolgt die Steuerung der Längenänderung des Oberlenkers zusätzlich abhängig vom Typ des Bodenbearbeitungsgerätes und optional auch abhängig von weiteren Faktoren. Beispielsweise kann Verkürzung des Oberlenkers für unterschiedliche Bodenbearbeitungsgeräte unterschiedlich stark erfolgen. Zudem kann eine Steuerung der Längenänderung des Oberlenkers auch abhängig von Bodenparametern und/oder Anbauparametern erfolgen.

Für eine effektive Längenänderung kann ein hydraulischer Zylinder am Oberlenker vorgesehen sein, mittels der die Kraft der angetriebenen Hinterachse auf den Boden schnell erhöht oder reduziert werden kann.

Bei dem erfindungsgemäßen Verfahren wird ein Höhenprofil des zu bearbeitenden Bodens über mindestens einen Sensor erfasst, um dann eine Längenänderung des Oberlenkers abhängig von dem erfassten Höhenprofil des zu bearbeitenden Bodens durchzuführen. Dadurch kann die Kraftübertragung an dem Oberlenker abhängig von dem Höhenprofil gesteuert werden.

Die Steuerung kann bei Erfassung eines Anstiegs bei dem zu bearbeitenden Boden eine Länge des Oberlenkers geringfügig vergrößern, um auf eine veränderte Bodenneigung zu reagieren, beispielsweise bevor die angetriebene Hinterachse der Arbeitsmaschine einen Anstieg erreicht. Dadurch kann eine entsprechende Steuerung die Traktion schon vor Erreichen der veränderten Bodenneigung erhöht werden, was ein kontinuierliches Durchfahren des Hindernisses erleichtert. Zudem kann die Neigung des Bodenbearbeitungsgerät bevorzugt durch die Längenänderung verstellt werden. Optional kann das Bodenbearbeitungsgerät auch in demselben Neigungswinkel angeordnet bleiben, wenn nur die Traktion verändert wird. Die Steuerung kann dabei automatisiert ohne Eingreifen des Fahrzeugführers der Arbeitsmaschine erfolgen.

Die Erfassung des Höhenprofils des zu bearbeitenden Bodens kann über Sensoren als Positions- oder Abstandssensoren erfolgen, wobei das Höhenprofil kontinuierlich bei einer Fahrtbewegung detektiert wird. Eine Bearbeitungstiefe des Bodenbearbeitungsgerätes kann dabei im Wesentlichen konstant bleiben. Durch die Längenänderung an dem Oberlenker wird nur die Traktion während der Bodenbearbeitung durch Laständerung auf der angetriebenen Hinterachse erhöht oder verringert.

Die Erfindung wird nachfolgend anhand eines Ausführungsbeispiels mit Bezug auf die beigefügten Zeichnungen näher erläutert. Es zeigen:
- Figur 1: eine Ansicht einer erfindungsgemäßen landwirtschaftlichen Arbeitsmaschine;
- Figur 2: eine Ansicht der Arbeitsmaschine der Figur 1 mit verlängertem Oberlenker;
- Figur 3: eine Ansicht der Arbeitsmaschine der Figur 1 mit Darstellung der Gewichtskräfte, und
- Figur 4: eine Ansicht der Arbeitsmaschine der Figur 3 mit Darstellung der Gewichtskräfte bei erhöhter Traktion.

Eine Arbeitsmaschine 1, insbesondere ein Traktor, umfasst ein Fahrzeuggestell 2 mit einer Vorderachse 3 und einer angetriebenen Hinterachse 4. An einer Rückseite der Arbeitsmaschine 1 ist ein Hubwerk 5 als Heckhubwerk in Form einer Dreipunktaufhängung vorgesehen, die zwei Unterlenker 7 einen Oberlenker 6 aufweist, die jeweils gelenkig mit einem Rahmenteil der Arbeitsmaschine 1 verbunden sind und am gegenüberliegenden hinteren Ende mit einem Bodenbearbeitungsgerät 8 verbunden sind, insbesondere einem Pflug. Hierfür weist das Bodenbearbeitungsgerät 8 ein Verbindungselement 9 auf, das an dem Hubwerk 5 gehalten ist.

An der Arbeitsmaschine 1 ist ein erster Sensor 10 an einer Vorderseite und ein zweiter Sensor 11 zwischen der Vorderachse 3 und der angetriebenen Hinterachse 4 vorgesehen, um einen Abstand zu einem Boden zu messen. Ein weiterer optionaler Sensor 12 ist an dem Bodenbearbeitungsgerät 8 vorgesehen, um einen Abstand zu dem Boden zu erfassen. Die Sensoren 10, 11 und 12 sind als Abstandssensoren ausgebildet, können aber auch als optische Sensoren ausgebildet sein.

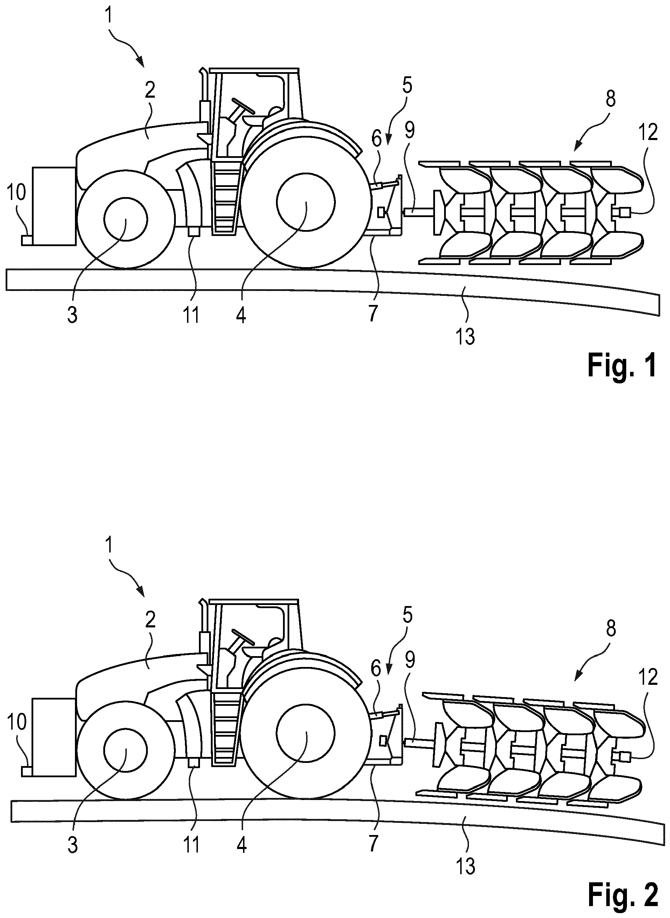

In Figur 1 ist die Fahrt der Arbeitsmaschine 1 mit dem Bodenbearbeitungsgerät 8 über einen Boden 13 gezeigt. Über die Sensoren 10, 11 und 12 kann ein Höhenprofil und eine Neigung des Bodens 13 erfasst werden und die Informationen werden an eine Steuerung weitergeleitet. Aufgrund der Neigung des Bodens 13 wird das Bodenbearbeitungsgerät 8 in einer zu geringen Tiefe durch den Boden 13 gezogen, was schematisch über den Spalt zwischen Boden 13 und dem Bodenbearbeitungsgerät 8 dargestellt ist. Durch die Erfassung des Höhenprofils und der Neigung des Bodens 13 kann über eine Steuerung gemäß Figur 2 der Oberlenker 6 des Hubwerkes 5 verlängert werden, beispielsweise über einen hydraulischen Hubzylinder, so dass die Neigung des Bodenbearbeitungsgerät 8 optimal an den Boden 13 angepasst werden kann, damit das Bodenbearbeitungsgerät 8 mit im wesentlichen konstanter Bearbeitungstiefe bewegt wird. Hierfür kann die Steuerung automatisiert Signale zum Ansteuern der Komponenten eines Hydraulikkreislaufes erzeugen, so dass ein Hydraulikfluid, wie ein Hydrauliköl, entweder der einen Kammer oder der anderen Kammer eines doppelt wirkenden Hydraulikzylinders zuführt und somit eine Kolbenstange an dem Hydraulikzylinder mit Druck beaufschlagt und verstellt.

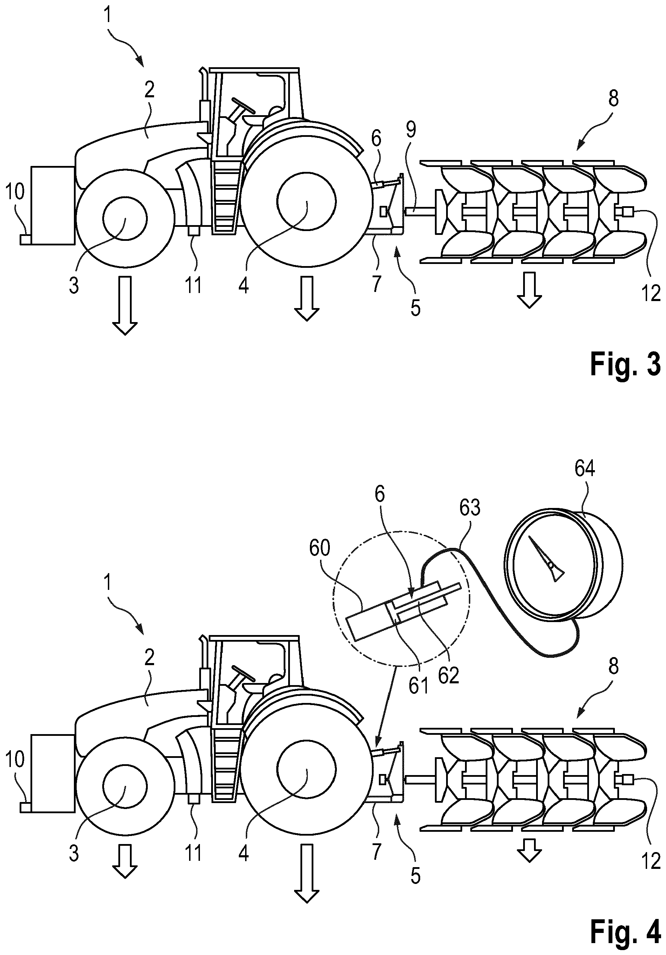

In Figur 3 ist der Zug aus Arbeitsmaschine 1 und Bodenbearbeitungsgerät 8 in einer Ausgangposition gezeigt und die Pfeile symbolisieren die Gewichtskräfte an der Vorderachse 3, der angetriebenen Hinterachse 4 und dem Bodenbearbeitungsgerät 8. Die Längenverstellung des Oberlenker 6 des Hubwerks 5 kann auch genutzt werden, um die Traktion an der Arbeitsmaschine 1 zu erhöhen, wie dies in Figur 4 gezeigt ist. Der Oberlenker 6 umfasst einen hydraulischen Zylinder 60, in dem ein Kolben 61 mit einer Kolbenstange 62 bewegbar angeordnet ist. Dieser doppelt wirkende Hydraulikzylinder ist über eine Leitung 63 mit einem Messgerät 64 verbunden, um den hydraulischen Druck zu erfassen.

Mit der angetriebenen Hinterachse 4 kann die Traktion erhöht werden, in dem der Oberlenker 6 geringfügig verkürzt wird oder der hydraulische Druck in den Hubzylinder erhöht wird. Dabei wird jedoch nicht die Ausrichtung des Bodenbearbeitungsgerätes 8 verändert, sondern nur die Traktion während der Bodenbearbeitung durch die Laständerung an der Hinterachse 4 der Arbeitsmaschine 1 erhöht, wie dies durch die Pfeile schematisch dargestellt ist. Durch eine geringfügige Längenänderung an dem Oberlenker 6 wird die Kraft an der vorderen Achse 3 der Arbeitsmaschine 1 und die Gewichtskraft an dem Bodenbearbeitungsgerät 8 gegenüber Figur 3 geringfügig reduziert, während die zu dem Boden gerichtete Kraft von der angetriebenen Hinterachse 4 entsprechend erhöht wird, was die Traktion impulsartig vergrößert.

Die Erhöhung oder Verringerung der Längenverstellung des Oberlenkers 6 kann auch von weiteren Parametern abhängig gemacht werden, beispielsweise von der Art des Bodenbearbeitungsgerätes 8, dem Boden oder der Bearbeitungstiefe. Entsprechende Informationen können an der Steuerung verarbeitet werden.

### Bezugszeichenliste

- 1: Arbeitsmaschine
- 2: Fahrzeuggestell
- 3: Vorderachse
- 4: Hinterachse
- 5: Hubwerk
- 6: Oberlenker
- 7: Unterlenker
- 8: Bodenbearbeitungsgerät
- 9: Verbindungselement
- 10: Sensor
- 11: Sensor
- 12: Sensor
- 13: Boden
- 60: hydraulischer Zylinder
- 61: Kolben
- 62: Kolbenstange
- 63: Leitung
- 64: Messgerät

## Patentansprüche

1. Landwirtschaftliche Arbeitsmaschine (1), insbesondere ein Traktor, mit einem als Dreipunktaufhängung ausgebildeten Hubwerk (5) zur Aufnahme eines Bodenbearbeitungsgeräts (8), insbesondere eines Pflugs, wobei das Hubwerk (5) zwei Unterlenker (7) und einen Oberlenker (6) umfasst, die jeweils mit einem ersten Ende gelenkig mit einem Rahmenteil der landwirtschaftlichen Arbeitsmaschine (1) verbunden sind und mit einem gegenüberliegenden zweiten Ende mit dem Bodenbearbeitungsgerät (8) verbindbar sind, wobei der Oberlenker (6) zur Verlagerung oder Ausrichtung des Bodenbearbeitungsgeräts (8) längenverstellbar ist, **dadurch gekennzeichnet, dass** über mindestens einen Sensor (10, 11, 12) ein Höhenprofil des zu bearbeitenden Bodens (13) erfassbar ist und eine Längenänderung des Oberlenkers (6) abhängig von dem erfassten Höhenprofil des zu bearbeitenden Bodens (13) ausführbar ist.

2. Arbeitsmaschine nach Anspruch 1, **dadurch gekennzeichnet, dass** eine Steuereinrichtung vorgesehen ist, die Daten von dem mindestens einen Sensor (10, 11, 12) zum Höhenprofil des zu bearbeitenden Bodens (13) erfasst und mittels der eine Längenänderung des Oberlenkers (6) steuerbar ist.

3. Arbeitsmaschine nach Anspruch 1 oder 2, **dadurch gekennzeichnet, dass** das Höhenprofil des zu bearbeitenden Bodens (13) über mehrere Sensoren (10, 11, 12) erfassbar ist, die als Positions- oder Abstandssensoren ausgebildet sind.

4. Arbeitsmaschine nach einem der vorhergehenden Ansprüche, **dadurch gekennzeichnet, dass** eine Steuerung der Längenänderung des Oberlenkers (6) auch abhängig vom Typ des Bodenbearbeitungsgerätes (8) erfolgt.

5. Arbeitsmaschine nach einem der vorhergehenden Ansprüche, **dadurch gekennzeichnet, dass** zur Längenänderung ein hydraulischer Zylinder am Oberlenker (6) vorgesehen ist.

6. Arbeitsmaschine nach einem der vorhergehenden Ansprüche, **dadurch gekennzeichnet, dass** mindestens ein Sensor (12) an dem Bodenbearbeitungsgerät (8) angeordnet ist.

7. Arbeitsmaschine nach einem der vorhergehenden Ansprüche, **dadurch gekennzeichnet, dass** das Hubwerk (5) als Heckhubwerk an der Arbeitsmaschine ausgebildet ist.

8. Arbeitsmaschine nach einem der vorhergehenden Ansprüche, **dadurch gekennzeichnet, dass** eine Steuerung der Längenänderung des Oberlenkers (6) auch abhängig von Bodenparametern und/oder Anbauparametern erfolgt.

9. Landwirtschaftlicher Zug bestehend aus einer landwirtschaftlichen Arbeitsmaschine (1), insbesondere einem Traktor, und einem an die landwirtschaftliche Arbeitsmaschine (1) angekoppelten Bodenbearbeitungsgerät (8), insbesondere einem Pflug, **dadurch gekennzeichnet, dass** die landwirtschaftliche Arbeitsmaschine (1) nach einem der Ansprüche 1 bis 8 ausgebildet ist.

10. Verfahren zum Betreiben eines landwirtschaftlichen Zugs bestehend aus einer landwirtschaftlichen Arbeitsmaschine (1), insbesondere einem Traktor, und einem an die landwirtschaftliche Arbeitsmaschine (1) angekoppelten Bodenbearbeitungsgerät (8), insbesondere einem Pflug, mit einem als Dreipunktaufhängung ausgebildeten Hubwerk (5) zur Aufnahme des Bodenbearbeitungsgeräts (8), wobei das Hubwerk (5) zwei Unterlenker (7) und einen Oberlenker (6) umfasst, die jeweils mit einem ersten Ende gelenkig mit einem Rahmenteil der landwirtschaftlichen Arbeitsmaschine (1) verbunden sind und mit einem gegenüberliegenden zweiten Ende mit dem Bodenbearbeitungsgerät (8) verbunden sind, wobei der Oberlenker (6) zur Verlagerung oder Ausrichtung des Bodenbearbeitungsgeräts (8) längenverstellbar ist, mit den folgenden Schritten:
- Erfassen eines Höhenprofils des zu bearbeitenden Bodens (13) über mindestens einen Sensor (10, 11, 12) und
- Durchführen einer Längenänderung des Oberlenkers (6) abhängig von dem erfassten Höhenprofil des zu bearbeitenden Bodens (13).

11. Verfahren nach Anspruch 10, **dadurch gekennzeichnet, dass** bei Erfassung eines Anstiegs bei dem zu bearbeitenden Boden (13) eine Länge des Oberlenkers (6) vergrößert wird.

12. Verfahren nach Anspruch 10 oder 11, **dadurch gekennzeichnet, dass** ein Höhenprofil über Sensoren (10, 11, 12) als Positions- oder Abstandssensoren kontinuierlich bei einer Fahrtbewegung detektiert wird.

13. Verfahren nach einem der Ansprüche 10 bis 12, **dadurch gekennzeichnet, dass** eine Bearbeitungstiefe des Bodenbearbeitungsgerätes (8) im Wesentlichen konstant bleibt.

14. Verfahren nach einem der Ansprüche 10 bis 13, **dadurch gekennzeichnet, dass** eine Längenänderung des Oberlenkers (6) durch eine Steuerung automatisiert erfolgt.

15. Verfahren nach einem der Ansprüche 10 bis 14, **dadurch gekennzeichnet, dass** eine Längenänderung des Oberlenkers (6) als Traktionsverstellung an einer angetriebenen Hinterachse (4) der Arbeitsmaschine eingesetzt wird.
